# EUROPEAN PATENT SPECIFICATION

(11) **EP 4 199 741 B1**
(45) Date of publication and mention of the grant of the patent: **02.12.2026**
(21) Application number: 21802515.3
(22) Date of filing: 12.10.2021
(51) Int. Cl.: A23K 20/158, A23K 50/40, A23K 50/42

(54) **PET FOOD COMPOSITIONS**
HAUSTIERFUTTERZUSAMMENSETZUNGEN
COMPOSITIONS ALIMENTAIRES POUR ANIMAUX DE COMPAGNIE

(30) Priority: 14.10.2020 US 202063091531 P
(43) Date of publication of application: 28.06.2023
(73) Proprietor: Hill's Pet Nutrition, Inc., Topeka, KS 66603 (US)
(72) Inventor: BADRI, Dayakar, Lawrence, Kansas 66047 (US); JACKSON, Matthew, Topeka, Kansas 66604 (US); JEWELL, Dennis, Lawrence, Kansas 66049 (US)
(74) Representative: Wichmann, Hendrik
(86) International application number: PCT/US2021/054460
(87) International publication number: WO 2022/081500

(56) References cited:
- CA-A1- 2 420 266
- US-A- 5 792 501
- US-A- 5 837 548
- US-A1- 2006 024 356
- US-B2- 10 362 794
- LEWIS M G ET AL: "Effect of essential polyunsaturated fatty acid modifications on prostaglandins production by MDCK canine kidney cells", PROSTAGLANDINS, BUTTERWORTH, STONEHAM, MA, US, vol. 22, no. 5, 1 November 1981 (1981-11-01), pages 747 - 760, XP023449072, ISSN: 0090-6980, [retrieved on 19811101], DOI: 10.1016/0090-6980(81)90214-8

## Description

### CROSS-REFERENCE TO RELATED APPLICATION

This application claims the benefit of priority from U.S. Provisional Application No. 63/091,531, filed October 14, 2020.

### BACKGROUND

The well-being of domestic animals is closely related to their feeding. Correct feeding should result in a fit and healthy pet. To achieve correct feeding, one may utilize certain ingredients and concentrations of those ingredients which yield beneficial effects for the animal. Such beneficial effects may include protection against inflammation, kidney damage, renal insufficiency, cardiovascular disease, and/or high urine solute concentration.

Kidney disease formation is common in dogs as aging occurs. Some veterinarians have recognized an interplay between renal disorders and the cardiovascular system in health and disease resulting in terming the concept cardiovascular-renal disorders (CvRD).

Arachidonic acid (AA) is a major component of cell membrane lipids and could be converted into various metabolites that trigger inflammatory responses. (Wang T. et al., Int J Mol Sci., 2019, 20: 3683). In fact, there is growing evidence of involvement of products of AA metabolism in cardiac fibrosis (Levick SP et al., J Immunol., 2007, 178:641-46). Furthermore, oleic acid concentration within rat serum has been reported to have an inverse relationship with the concentration of arachidonic acid (Hostmark and Haug, Lipids in Health and Disease, 2013, 12:40). CA 2 420 266 A1 describes a nutritional additive derived from fish oil and/or seal oil for use as food supplementation to increase serum levels of EPA and DHA in companion animals. US 10,362,794 B2 describes isolated thraustochytrid microorganisms as well as microbial oils and biomasses. Said microbial oils are described to comprise 75-95 wt.% of a triglyceride fraction having a docosahexaenoic acid content of 40-80 wt.% and an arachidonic acid content of 0.1-1.5 wt.% by weight, wherein said microbial oil further comprises an effective amount of at least one added antioxidant to provide oxidative stability. US 5,792,501 describes an artificially produced feline milk substitute composition comprising casein and whey, wherein fatty acids of the milk substitute may include palmitic, oleic, linolenic, arachidonic, docosahexaenoic acid.

Increased blood plasma levels of interleukin 8 (IL-8) has been shown to potentially be involved with the pathogenesis of acute kidney injury (Liangos et al., Nephron Clin Pract., 2009, 113:c148-C154) and in the establishment and preservation of the inflammatory micro-environment of the insulted vascular wall (Apostolakis S. et al., Cardiovasc Res., 2009, 84(3):353-60).

It would therefore be desirable to provide a pet food composition which may affect one or more of reducing serum levels of arachidonic acid, lowering IL-8 levels, lowering inflammation, and/or protection against cardiovascular-renal disorders.

### BRIEF SUMMARY

The present invention relates to the pet food compositions and medical uses defined in the claims.

Applicants have discovered that utilization of certain ingredients within pet food provides for effective health benefits. In one aspect, the health benefits may be to increase beneficial metabolites of the animal. In another aspect, the health benefits may be to decrease one or more of detrimental metabolites, interleukin, and prostaglandin of the animal. Thus, the invention is directed to pet food compositions comprising ratios of oleic acid to arachidonic acid as defined in the claims and to the medical uses of a combination of oleic and arachidonic acid defined in the claims.

In one aspect, the present invention is directed to a pet food composition comprising: oleic acid ("OA") and arachidonic acid ("AA"); wherein the weight ratio of oleic acid to arachidonic acid is from 160:1 to 190: 1. In certain embodiments, the oleic acid is present in an amount of about 4% to about 12%, about 4% to about 10%, or about 4% to about 9%, based on the dry weight of the pet food composition. In certain embodiments, the arachidonic acid is present in an amount of about 0.02% to about 1%, about 0.02% to about 0.08%, or about 0.02% to about 0.06%, based on the dry weight of the pet food composition. In certain embodiments, the composition further comprises one or more omega-3 fatty acids. In certain embodiments, the omega-3 fatty acids are present in an amount of about 0.1% to about 1%, about 0.1% to about 0.8%, or about 0.3% to about 0.8%, based on the dry weight of the pet food composition. In certain embodiments, the composition further comprises one or more omega-6 fatty acids. In certain embodiments, the omega-6 fatty acids are present in an amount of about 1% to about 10%, about 1.5% to about 7%, or about 2% to about 5%, based on the dry weight of the pet food composition. In certain embodiments, the ratio of omega-3 fatty acid to omega-6 fatty acid is from about 1:5 to about 1:10, about 1:6 to about 1:9, or about 1:7 to about 1:9.

Said pet composition may be used in a method for increasing the oleic acid conjugated metabolites and decreasing the arachidonic acid conjugated metabolites in a dog, comprising feeding the animal a pet food composition as described in any one of claims 1 to 6. This method may be used for reducing prostaglandin E2 (PGE2) levels in the kidney tissue of a dog.

In a further aspect, the invention is directed to a pet food composition comprising oleic acid (OA) and arachidonic acid (AA); wherein the ratio of oleic acid to arachidonic acid is from 40.85:1 to 45.15:1. In certain embodiments, the ratio of OA:AA is about 43:1. In certain embodiments, the oleic acid is present in an amount of about 2% to about 8%, about 3% to about 7%, or about 4% to about 6%, based on the dry weight of the pet food composition. In certain embodiments, the arachidonic acid is present in an amount of about 0.05% to about 2%, about 0.05% to about 1%, or about 0.07% to about 0.3%, based on the dry weight of the pet food composition. In certain embodiments, the composition further comprises one or more omega-3 fatty acids. In certain embodiments, the omega-3 fatty acids are present in an amount of about 0.05% to about 1%, about 0.05% to about 0.08%, or about 0.05% to about 0.5%, based on the dry weight of the pet food composition. In certain embodiments, the composition further comprises omega-6 fatty acids. In certain embodiments, the omega-6 fatty acids are present in an amount of about 1% to about 10%, about 1.5% to about 5%, or about 2% to about 5%, based on the dry weight of the pet food composition. In certain embodiments, the ratio of omega-3 fatty acids to omega-6 fatty acids is from about 1:10 to about 1:20, about 1:12 to about 1:18, or about 1:12 to about 1:16. Said pet food composition may be used in a method for increasing the oleic acid conjugated metabolites and decreasing the arachidonic acid conjugated metabolites in a cat, comprising feeding the animal a pet food composition as described in any one of the embodiments within this paragraph. Said pet food composition may also be used in a method for reducing prostaglandin E2 (PGE2) levels in the kidney tissue of a cat, comprising feeding the animal a pet food composition as described in any one of the embodiments within this paragraph.

Further areas of applicability of the present invention will become apparent from the detailed description provided hereinafter. It should be understood that the detailed description and specific examples, while indicating the typical embodiments of the invention, are intended for purposes of illustration only.

### BRIEF DESCRIPTION OF THE DRAWINGS

The detailed description of the invention will be better understood when read in conjunction with the appended drawings. It should be understood, however, that the invention is defined in the appended claims and is not limited to the precise arrangements and instrumentalities of the embodiments shown in the drawings.
Figure 1 depicts a chart showing the comparison of oleic acid (OA); and arachidonic acid (AA) conjugated metabolites collected from dog serum.
Figure 2 depicts a chart showing the comparison of oleic acid (OA); and arachidonic acid (AA) conjugated metabolites collected from cat serum.
Figure 3 depicts a model showing the relationship of arachidonic acid to insufficiency and injury and to cardiovascular risk (CV Risk).
Figure 4 depicts the eicosanoids biosynthesis pathway from arachidonic acid.
Figure 5 depicts a MANOVA analysis of serum oleic acid and arachidonic acid conjugated metabolites from dogs.
Figure 6 depicts the abundance of dog serum oleic acid and arachidonic acid conjugated metabolites.
Figure 7 depicts a MANOVA analysis of serum oleic acid and arachidonic acid conjugated metabolites from cats.
Figure 8 depicts the abundance of cat serum oleic acid and arachidonic acid conjugated metabolites.
Figure 9 depicts serum levels of cytokine IL-8 from dogs.
Figure 10 depicts a hypothetical mechanism showing the relationship between dietary intake of food containing a high ratio of OA:AA to inflammation and related diseases. Figure 10 is not according to the invention and for illustration purposes only.

### DETAILED DESCRIPTION

For illustrative purposes, the principles of the present invention are described by referencing various exemplary embodiments thereof. Although certain embodiments of the invention are specifically described herein, one of ordinary skill in the art will readily recognize that the same principles are equally applicable to, and can be employed in other applications and methods.

As used herein and in the appended claims, the singular forms "a", "an", and "the" include plural references unless the context dictates otherwise. The singular form of any class of the ingredients refers not only to one chemical species within that class, but also to a mixture of those chemical species. The terms "a" (or "an"), "one or more" and "at least one" may be used interchangeably herein. The terms "comprising", "including", "containing", and "having" may be used interchangeably. The term "include" should be interpreted as "include, but are not limited to". The term "including" should be interpreted as "including, but are not limited to".

As used throughout, ranges are used as shorthand for describing each and every value that is within the range. Any value within the range can be selected as the terminus of the range.

Unless otherwise specified, all percentages and amounts expressed herein and elsewhere in the specification should be understood to refer to percentages by weight of the total composition. Reference to a molecule, or to molecules, being present at a "wt. %" refers to the amount of that molecule, or molecules, present in the composition based on the total weight of the composition.

According to the present application, use of the term "about" in conjunction with a numeral value refers to a value that may be +/- 5% of that numeral. As used herein, the term "substantially free" is intended to mean an amount less than about 5.0 weight %, less than 3.0 weight %, 1.0 wt.%; preferably less than about 0.5 wt.%, and more preferably less than about 0.25 wt.% of the composition.

Unless defined otherwise, all technical and scientific terms used herein have the same meanings as commonly understood by one of ordinary skill in the art to which this invention belongs. In the event of a conflict in a definition in the present disclosure and that of a cited reference, the present disclosure controls.

The present disclosure is directed toward pet food compositions and methods of using such pet food compositions for the treatment of domestic pets. In certain embodiments, the pet is a dog. In other embodiments, the pet is a cat.

The present inventors have surprisingly and unexpectedly discovered that providing animals a pet food diet comprising a high ratio of oleic to arachidonic acid provides for enhanced health benefit for the animal. Such enhanced health benefit may be exemplified by numerous aspects. In a first aspect, the enhanced health benefit is a synergistic effect for an increase in biomarkers related to health. By feeding animals compositions as described herein, the inventors have observed a statistically significant linear relationship between an overall average of the sum of changes of certain biomarkers and the ratio of OA:AA utilized. This relationship was observed by taking the sum of oleic acid containing metabolites and comparing it to the sum of arachidonic acid containing metabolites in companion animals fed various food compositions. Without being bound to theory, it is understood that an increasing amount of arachidonic acid containing metabolites produces proinflammatory effects while an increasing amount of oleic acid containing metabolites is less inflammatory.

In one aspect, the present disclosure therefore provides pet food compositions comprising oleic acid and arachidonic acid at ratios to each other as defined in the claims. In dogs, ratio of oleic acid to arachidonic acid may be as defined in claim 1. In cats, the ratio of oleic acid to arachidonic acid may be as defined in claim 8. The weight ratios used herein may be expressed as mass fractions. In certain embodiments, the pet food is in a dry form. In certain embodiments, the pet food is in a wet form.

The pet food composition of claim 1 comprises oleic acid ("OA") and arachidonic acid ("AA") at a weight ratio from 160:1 to 190:1. For instance, in some embodiments for canines, the pet food composition may have a weight ratio of oleic acid to arachidonic acid of from 160:1 to 180:1; about 170:1 to about 180:1; about 180:1 to 190:1, including any ranges or subranges thereof.

In embodiments of the pet food of claim 1, the ratio of oleic acid to arachidonic acid ("OA:AA") is about 172:1. In certain embodiments of the pet food of claim 1, the ratio of OA:AA is from about 165:1 to 190:1, or about 170:1 to about 185:1. In further embodiments of the pet food of claim 1, the ratio of OA:AA is about 172.2. The ratio of OA:AA in the pet food of claim 8 is from 40.85 to 45.15 , or about 43:1.

The oleic acid may be present at various amounts or concentrations. In one embodiment, oleic acid may be present in an amount of from about 4% to about 12%, based on the dry weight of the pet food composition. For example, the oleic acid may be present in an amount of about 4.0 weight %, about 4.2 weight %, about 4.6 weight %, about 4.8 weight %, about 5.0 weight %, about 5.2 weight %, about 5.4 weight %, about 5.6 weight %, about 5.8 weight %, about 6.0 weight %, about 6.2 weight %, about 6.5 weight %, about 6.8 weight %, about 7.0 weight %, about 7.25 weight %, about 7.5 weight %, about 7.75 weight %, about 8.0 weight %, about 8.25 weight %, about 8.5 weight %, about 8.75 weight %, about 9.0 weight %, about 9.5 weight %, about 10.0 weight %, about 10.5 weight %, about 11.0 weight %, about 11.5 weight %, about 12.0 weight %, about 12.5 weight %, about 13.0 weight %, about 13.5 weight %, or about 14.0 weight %. In another example, the oleic acid may be present in an amount of from about 4% to about 10%, about 4% to about 9.5%, or about 4% to about 9%, based on the dry weight of the pet food composition. In further embodiments, the oleic acid is present in an amount of about 2% to about 8%, about 3% to about 7%, or about 4% to about 6%, based on the dry weight of the pet food composition.

The arachidonic acid may be present at various amounts or concentrations. In one embodiment, arachidonic acid may be present in an amount of from about 0.02% to about 1%, based on the dry weight of the pet food composition. For example, the arachidonic acid may be present in an amount of about 0.02 weight %, about 0.04 weight %, about 0.06 weight %, about 0.08 weight %, about 0.1 weight %, about 0.12 weight %, about 0.14 weight %, about 0.16 weight %, about 0.18 weight %, about 0.2 weight %, about 0.22 weight %, about 0.24 weight %, about 0.26 weight %, about 0.28 weight %, about 0.3 weight %, about 0.35 weight %, about 0.4 weight %, about 0.45 weight %, about 0.5 weight %, about 0.55 weight %, about 0.6 weight %, about 0.65 weight %, about 0.7 weight %, about 0.75 weight %, about 0.8 weight %, about 0.85 weight %, about 0.9 weight %, about 0.95 weight %, or about 1.0 weight %. In another example, the arachidonic acid may be present in an amount of from about 0.02% to about 0.08%, about 0.02% to about 0.06%, or about 0.02% to about 0.04%, based on the dry weight of the pet food composition. In further embodiments, the arachidonic acid is present in an amount of about 0.05% to about 2%, about 0.05% to about 1%, or about 0.07% to about 0.3%, based on the dry weight of the pet food composition.

In certain embodiments, the pet food further comprises one or more omega-3 fatty acids. The omega-3 fatty acids may be present at various amounts or concentrations. In one embodiment, the omega-3 fatty acids may be present in an amount of from about 0.1% to about 1%, based on the dry weight of the pet food composition. For example, the omega-3 fatty acids may be present in an amount of about 0.1 weight %, about 0.125 weight %, about 0.15 weight %, about 0.175 weight %, about 0.2 weight %, about 0.225 weight %, about 0.25 weight %, about 0.275 weight %, about 0.3 weight %, about 0.325 weight %, about 0.35 weight %, about 0.375 weight %, about 0.4 weight %, about 0.425 weight %, about 0.45 weight %, about 0.475 weight %, about 0.5 weight %, about 0.525 weight %, about 0.55 weight %, about 0.575 weight %, about 0.6 weight %, about 0.65 weight %, about 0.7 weight %, about 0.75 weight %, about 0.8 weight %, about 0.85 weight %, about 0.9 weight %, about 0.95 weight %, or about 1.0 weight %. In another example, the omega-3 fatty acid may be present in an amount of from about 0.1% to about 0.8%, or about 0.1% to about 0.6%, based on the dry weight of the pet food composition. In certain embodiments, the omega-3 fatty acids are present in an amount of about 0.05% to about 1%, about 0.05% to about 0.08%, or about 0.05% to about 0.5%, based on the dry weight of the pet food composition.

In certain embodiments, the pet food further comprises one or more omega-6 fatty acids. The omega-6 fatty acids may be present at various amounts or concentrations. In one embodiment, the omega-6 fatty acids may be present in an amount of from about 1% to about 10%, based on the dry weight of the pet food composition. For example, the omega-6 fatty acids may be present in an amount of about 1 weight %, about 1.5 weight %, about 2.0 weight %, about 2.5 weight %, about 3.0 weight %, about 3.5 weight %, about 4.0 weight %, about 4.5 weight %, about 5 weight %, about 5.5 weight %, about 6 weight %, about 6.5 weight %, about 7 weight %, about 7.5 weight %, about 8 weight %, about 8.5 weight %, about 9 weight %, about 9.5 weight %, or about 10 weight %. In another example, the omega-6 fatty acids may be present in an amount of from about 1.5% to about 7%, from about 2% to about 7%, or about 2% to about 5%, based on the dry weight of the pet food composition. In certain embodiments, the omega-6 fatty acids are present in an amount of about 1% to about 10%, about 1.5% to about 5%, or about 2% to about 5%, based on the dry weight of the pet food composition.

In one embodiment, the ratio of omega-3 fatty acid, or acids, to omega-6 fatty acid, or acids, may vary. In certain embodiments, the ratio of omega-3 fatty acid, or acids, to omega-6 fatty acid, or acids, is from about 1:5 to about 1:10, about 1:6 to about 1:9, or about 1:7 to about 1:9. In other embodiments, the ratio of omega-3 fatty acid, or acids, to omega-6 fatty acid, or acids, is about 1:8. In certain embodiments, the ratio of omega-3 fatty acids to omega-6 fatty acids is from about 1:10 to about 1:20, about 1:12 to about 1:18, or about 1:12 to about 1:16.

The pet food compositions may in some embodiments contain one or more additional fatty acid(s). The one or more fatty acid(s) are preferably chosen from those having 10 to 50 total carbon atoms, from 10 to 40 total carbon atoms, or from 10 to 30 total carbon atoms. In some embodiments, the pet food compositions have a total number of carbon atoms of 10 to 30, 12 to 28, 14 to 26, 16 to 24, 16 to 22, or 16 to 20. The one or more fatty acids chosen from polyunsaturated fatty acids. In at least one embodiment, the composition comprises a polyunsaturated fatty acid having a total of 18 carbon atoms.

The fatty acid may be derived from a plant source. Examples of plant sources for deriving or obtaining the fatty acids include, e.g., flaxseed, algae, avocado, hemp seeds, pumpkin seeds, sunflower seeds, walnuts, soya, or combinations of two or more thereof. In some embodiments, however, the fatty acids are derived from an animal source or synthesized.

The additional fatty acid(s) may be comprised of linolenic acid, stearic acid, arachidic acid, stearidonic acid, eicosapentaenoic acid, linolelaidic acid cervonic acid, docosatetraenoic acid, palmitoleic acid, vaccenic acid, paullinic acid, elaidic acid, gondoic acid, erucic acid, nervonic acid, mead acid, or a combination of two or more thereof. In some instances, the additional fatty acid comprises vaccenic acid, elaidic acid, linolelaidic acid, linoleic acid, stearidonic acid, or a combination of two or more thereof. The pet food compositions may comprise a linoleic acid chosen from α-linolenic acid, γ-linolenic acid, and a combination thereof.

The pet food compositions may have an amount of additional fatty acid(s) of from about 0.5 to about 20 weight %, based on the total weight of the composition. For example, the composition may comprise one or more fatty acid(s) in an amount of about 0.5 to about 20 weight %, about 0.5 to about 15 weight %, about 0.5 to about 10 weight %, about 0.5 to about 8 weight %, about 0.5 to about 6 weight %, about 0.5 to about 5 weight %, about 0.5 to about 4 weight %, about 0.5 to about 3 weight %; about 1 to about 20 weight %, about 1 to about 15 weight %, about 1 to about 10 weight %, about 1 to about 8 weight %, about 1 to about 6 weight %, about 1 to about 5 weight %, about 1 to about 4 weight %, about 1 to about 3 weight %; about 1.5 to about 20 weight %, about 1.5 to about 15 weight %, about 1.5 to about 10 weight %, about 1.5 to about 8 weight %, about 1.5 to about 6 weight %, about 1.5 to about 5 weight %, about 1.5 to about 4 weight %, about 1.5 to about 3 weight %; about 2 to about 20 weight %, about 2 to about 15 weight %, about 2 to about 10 weight %, about 2 to about 8 weight %, about 2 to about 6 weight %, about 2 to about 5 weight %, about 2 to about 4 weight %, about 2 to about 3 weight %; about 2.5 to about 20 weight %, about 2.5 to about 15 weight %, about 2.5 to about 10 weight %, about 2.5 to about 8 weight %, about 2.5 to about 6 weight %, about 2.5 to about 5 weight %, about 2.5 to about 4 weight %; about 3 to about 20 weight %, about 3 to about 15 weight %, about 3 to about 10 weight %, about 3 to about 8 weight %, about 3 to about 6 weight %, about 3 to about 5 weight %, or about 3 to about 4 weight %, including all ranges and subranges thereof, based on the dry weight of the composition.

The compositions of the present invention may optionally comprise additional ingredients suitable for use in pet food compositions. Examples of such ingredients include, but are not limited to, protein, fat, carbohydrates, dietary fibers, amino acids, minerals, trace elements, vitamins, additives.

Dietary fiber refers to components of a plant which are resistant to digestion by an animal's digestive enzymes. Dietary fiber includes soluble and insoluble fibers. Soluble fibers are resistant to digestion and absorption in the small intestine and undergo complete or partial fermentation in the large intestine, e.g., beet pulp, guar gum, chicory root, psyllium, pectin, blueberry, cranberry, squash, apples, oats, beans, citrus, barley, or peas. Insoluble fibers can be supplied by any of a variety of sources, including, for example, cellulose, whole wheat products, wheat oat, corn bran, flax seed, grapes, celery, green beans, cauliflower, potato skins, fruit skins, vegetable skins, peanut hulls, and soy fiber. Crude fiber includes indigestible components contained in cell walls and cell contents of plants such as grains, for example, hulls of grains such as rice, corn, and beans. Typical fiber amounts in compositions of the present disclosure can be from about 0 to 10%, or about 1% to about 5%.

The total dietary fiber may be present at various amounts or concentrations. In one embodiment, total dietary fiber may be present in an amount of less than 20 %, based on the dry weight of the pet food composition. In certain embodiments, the total dietary fiber is present in an amount of about 1% to about 20%, based on the dry weight of the pet food composition. For example, total dietary fiber may be present in an amount of about 1 weight %, about 1.5 weight %, about 2.0 weight %, about 2.5 weight %, about 3.0 weight %, about 3.5 weight %, about 4.0 weight %, about 4.5 weight %, about 5.0 weight %, about 5.5 weight %, about 6.0 weight %, about 6.5 weight %, about 7.0 weight %, or any range therebetween. In another example, total dietary fiber may be present in an amount of from about 1 to about 10 weight%, about 2 to about 8 weight %, about 3 to about 8 weight %, about 4 to about 7 weight %, about 4 to about 6 weight %, or about 5 to about 6 weight percent %, including any ranges or subranges thereof, based on the dry weight of the pet food composition.

Amino acids, including essential amino acids, can be added to the compositions of the present disclosure as free amino acids, or supplied by any number of sources, e.g., crude protein, to the compositions of the present disclosure. Essential amino acids are amino acids that cannot be synthesized de novo, or in sufficient quantities by an organism and thus must be supplied in the diet. Essential amino acids vary from species to species, depending upon the organism's metabolism. For example, it is generally understood that the essential amino acids for dogs and cats (and humans) are phenylalanine, leucine, methionine, lysine, isoleucine, valine, threonine, tryptophan, histidine and arginine. In addition, taurine, while technically not an amino acid but a derivative of cysteine, is an essential nutrient for cats.

The composition may include protein at various amounts or concentrations. In one embodiment, the protein may be present in an amount of from about 20% to about 45%, based on the dry weight of the pet food composition. For example, the protein may be present in an amount of about 20 weight %, about 25 weight %, about 30 weight %, about 35 weight %, about 40 weight %, or about 45 weight. In another example, the protein may be present in an amount of from about 25% to about 40%, from about 30% to about 40%, or about 30% to about 35%, based on the dry weight of the pet food composition. In certain embodiments, the protein is present in an amount of about 20% to about 35%, about 25% to about 35%, or about 28% to about 35%, based on the dry weight of the pet food composition.

The pet food composition may comprise protein and/or a digestible crude protein. "Digestible crude protein" is the portion of protein that is available or can be converted into free nitrogen (amino acids) after digesting with gastric enzymes. In vitro measurement of digestible crude protein may be accomplished by using gastric enzymes such as pepsin and digesting a sample and measuring the free amino acid after digestion. In vivo measurement of digestible crude protein may be accomplished by measuring the protein levels in a feed/food sample and feeding the sample to an animal and measuring the amount of nitrogen collected in the animal's feces.

A portion of the protein in the composition may be digestible protein. For example, the composition may include an amount of protein, where about 40 weight % or more, about 50 weight % or more, about 60 weight % or more, about 70 weight % or more, about 80 weight % or more, or about 90 weight % or more of the protein is digestible protein. In some embodiments, e.g., when the composition desirable promotes weight loss, the portion of protein that is digestible protein is about 60 weight % or less, about 50 weight % or less, about 40 weight % or less, about 30 weight % or less, about 20 weight % or less, or about 10 weight % or less, based on the total amount of protein in the composition. In further embodiment, the amount of protein that is digestible protein is about 10 to about 90 weight %, about 10 to about 70 weight %, about 10 to about 50 weight %, about 10 to about 30 weight %; about 20 to about 90 weight %, about 20 to about 70 weight %, about 20 to about 50 weight %, about 20 to about 40 weight %, about 20 to about 30 weight %, about 20 to about 25 weight %; about 23 to about 90 weight %, about 23 to about 70 weight %, about 23 to about 50 weight %, about 23 to about 40 weight %, about 23 to about 30 weight %, about 23 to about 25 weight %, including ranges and subranges therein, based on the total amount of protein in the composition.

The compositions of the present invention may optionally comprise fat. The term "fat" generally refers to a lipid or mixture of lipids that may generally be a solid or a liquid at ordinary room temperatures (e.g., 25°C) and pressures (e.g., 1 atm). In some instances, the fat may be a viscous liquid or an amorphous solid at standard room temperature and pressure. Fat can be supplied by any of a variety of sources known by those skilled in the art, including meat, meat by-products, canola oil, fish oil, and plants. Plant fat sources include wheat, flaxseed, rye, barley, rice, sorghum, corn, oats, millet, wheat germ, corn germ, soybeans, peanuts, and cottonseed, as well as oils derived from these and other plant fat sources. The compositions of the present disclosure may contain at least about 9% (or from about 9% to about 35%, or from about 10% to about 25%, or from about 15% to about 22%) total fat.

In some cases, the fat in the pet food compositions is crude fat. Crude fat may be included into the pet food compositions in amounts of from about 10 to about 20 weight %, about 10 to about 18 weight %, about 10 to about 16 weight %; about 12 to about 20 weight %, about 12 to about 18 weight %, about 12 to about 16 weight %, about 12 to about 14 weight %, or about 12 to about 13 weight %, based on the total weight of the composition. In some cases, it may be preferable that about 50 weight % or more, about 60 weight % or more, about 70 weight % or more, about 80 weight % or more, or about 90 weight % or more of the total fat is obtained from an animal source. Alternatively, about 50 weight % or more, about 60 weight % or more, about 70 weight % or more, about 80 weight % or more, or about 90 weight % or more of the total fat may be obtained from a plant source.

Carbohydrates can be supplied by any of a variety of sources known by those skilled in the art, including oat fiber, cellulose, peanut hulls, beet pulp, parboiled rice, corn starch, corn gluten meal, and any combination of those sources. Grains supplying carbohydrates can include, but are not limited to, wheat, corn, barley, and rice. Carbohydrates content of foods can be determined by any number of methods known by those of skill in the art. Generally, carbohydrate percentage can be calculated as nitrogen free extract ("NFE"), which can be calculated as follows: NFE=100%-moisture %-protein %-fat %-ash %-crude fiber %. The amount of carbohydrate, e.g., calculated as NFE, present in the composition may be about 10 to about 90 weight %, about 10 to about 70 weight %, about 10 to about 50 weight %, about 10 to about 40 weight%, about 10 to about 30 weight %, about 10 to about 20 wt.%; about 20 to about 90 weight %, about 20 to about 70 weight %, about 20 to about 50 weight %, about 20 to about 40 weight%; about 30 to about 90 weight %, about 30 to about 70 weight %, about 30 to about 50 weight %, about 30 to about 40 weight%; about 40 to about 90 weight %, about 40 to about 70 weight %, or about 40 to about 60 weight %, based on the total weight of the composition.

The compositions of the present disclosure can also contain one or more minerals and/or trace elements, e.g., calcium, phosphorus, sodium, potassium, magnesium, manganese, copper, zinc, chromium, molybdenum, selenium, or iron salts having counterions such as, for example chloride, iodide, fluoride, sulfide or oxide, in amounts required to avoid deficiency and maintain health. These amounts are known by those of skill in the art, for example, as provided in the Official Publication of the Associate of American Feed Control Officials, Inc. ("AAFCO"), Nutrient Requirements of Dogs and Cats, 2006. Typical mineral amounts are about 0.1% to about 4% or about 1% to about 2%.

The compositions of the present invention can also include vitamins in amounts required to avoid deficiency and maintain health. These amounts and methods of measurement are known by those skilled in the art. For example, the Official Publication of the Associate of American Feed Control Officials, Inc. ("AAFCO"), Nutrient Requirements of Dogs and Cats, 2006 provides recommended amounts of such ingredients for dogs and cats. As contemplated herein, vitamins can include, but are not limited to, vitamin A, vitamin B.sub.1, vitamin B.sub.2, vitamin B.sub.6, vitamin B.sub.12, vitamin C, vitamin D, vitamin E, vitamin H (biotin), vitamin K, folic acid, choline, inositol, niacin, and pantothenic acid. Typical vitamin amounts in the composition of the invention are about from 0 to about 3% or about 1% to about 2%.

The compositions of the present disclosure can additionally comprise other additives such as palatability enhancers and stabilizers in amounts and combinations familiar to one of skill in the art. Stabilizing substances include, for example, substances that tend to increase the shelf life of the composition. Other examples of other such additives potentially suitable for inclusion in the compositions of the invention include, for example, preservatives, colorants, antioxidants, flavorants, synergists and sequestrants, packaging gases, stabilizers, emulsifiers, thickeners, gelling agents, and humectants. Examples of emulsifiers and/or thickening agents include, for example, gelatin, cellulose ethers, starch, starch esters, starch ethers, and modified starches. The concentration of such additives in the composition typically can be up to about 5% by weight. In some embodiments, the concentration of such additives (particularly where such additives are primarily nutritional balancing agents, such as vitamins and minerals) is from about 0% to about 2.0% by weight. In some embodiments, the concentration of such additives (again, particularly where such additives are primarily nutritional balancing agents) is from about 0% to about 1.0% by weight.

Foods of any consistency or moisture content are contemplated, e.g., the compositions of the present invention can be, for example, a dry, moist or semi-moist animal food composition. In some embodiments, the moisture content is from about 3% to about 90% of the total weight of the composition. "Semi-moist" refers to a food composition containing from about 25 to about 35% moisture. "Moist" food refers to a food composition that has a moisture content of about 60 to 90% or greater. "Dry" food refers to a food composition with about 3 to about 11% moisture content and is often manufactured in the form of small bits or kibbles.

In certain aspects, the present application further discloses a method of making any of the compositions of the present disclosure. In preparing a composition of the present invention in wet or canned form, any ingredient (e.g., desired ratio of OA:AA) generally can, for example, be incorporated into the composition during the processing of the formulation, such as during and/or after mixing of other components of the composition. Distribution of these components into the composition can be accomplished by conventional means. In some embodiments, ground animal and poultry proteinaceous tissues are mixed with the other ingredients, including fish oils, cereal grains, other nutritionally balancing ingredients, special-purpose additives (e.g., vitamin and mineral mixtures, inorganic salts, cellulose and beet pulp, bulking agents, and the like); and water that is sufficient for processing is also added. These ingredients can be mixed in a vessel suitable for heating while blending the components. Heating of the mixture can be effected using any suitable manner, such as, for example, by direct steam injection or by using a vessel fitted with a heat exchanger. Following the addition of the last ingredient, the mixture can be heated to a temperature range of from about 50 °F (10 °C) to about 212 °F (100 °C). In some instances, the mixture can be heated to a temperature range of from about 70 °F. (21 °C) to about 140 °F (60 °C). Temperatures outside these ranges are generally acceptable but may be commercially impractical without use of other processing aids. When heated to the appropriate temperature, the material will typically be in the form of a thick liquid. The thick liquid can be filled into cans. When filled into cans, a lid is applied, and the container is hermetically sealed. The sealed can is then placed into conventional equipment designed to sterilize the contents. This is usually accomplished by heating to temperatures of greater than about 230 °F (110 °C) for an appropriate time, which is dependent on, for example, the temperature used and the composition.

Pet food compositions can alternatively be prepared in a dry form using conventional processes. Typically, dry ingredients, including, for example, animal protein, plant protein, grains, etc., are ground and mixed together. Moist or liquid ingredients, including fats, oils, animal protein, water, etc., are then added to and mixed with the dry mix. The mixture is then processed into kibbles or similar dry pieces. Kibble is often formed using an extrusion process in which the mixture of dry and wet ingredients is subjected to mechanical work at a high pressure and temperature, then forced through small openings and cut off into kibble by a rotating knife. The wet kibble is then dried and optionally coated with one or more topical coatings which may include, for example, flavors, fats, oils, powders, and the like. Kibble also can be made from the dough using a baking process, rather than extrusion, wherein the dough is placed into a mold before dry-heat processing.

A pet food composition as described herein may be used in a method for increasing certain metabolites of a canine or feline, comprising feeding the animal the pet food composition in an amount effective to increase the beneficial metabolite biomarkers of the animal. In particular, such increase in the beneficial metabolite biomarkers is more than would occur under conditions where one or more of the specified ingredients are not present, or are not present at desired ratios. In particular, the beneficial metabolite biomarkers are oleic acid conjugated metabolites.

A pet food composition as described herein may be used in a method for decreasing certain metabolites of a canine or feline, comprising feeding the animal the pet food composition in an amount effective to decrease the metabolite biomarkers of the animal. In particular, such decrease in the metabolite biomarkers is more than would occur under conditions where one or more of the specified ingredients are not present, or are not present at desired ratios. In particular, the metabolite biomarkers are arachidonic acid conjugated metabolites.

A pet food composition as described herein may be used in a method for decreasing certain cytokines of an animal, comprising feeding the animal the pet food composition in an amount effective to decrease the cytokine of the animal. In particular, such decrease in the cytokine is more than would occur under conditions where one or more of the specified ingredients are not present, or are not present at desired ratios. In particular, the cytokine is interleukin-8 (IL-8).

A pet food composition as described herein may be used in a method for decreasing certain prostaglandins of an animal, comprising feeding the animal the pet food composition in an amount effective to decrease the cytokine of the animal. In particular, such decrease in the prostaglandin is more than would occur under conditions where one or more of the specified ingredients are not present, or are not present at desired ratios. In particular, the prostaglandin is prostaglandin E2 (PGE2).

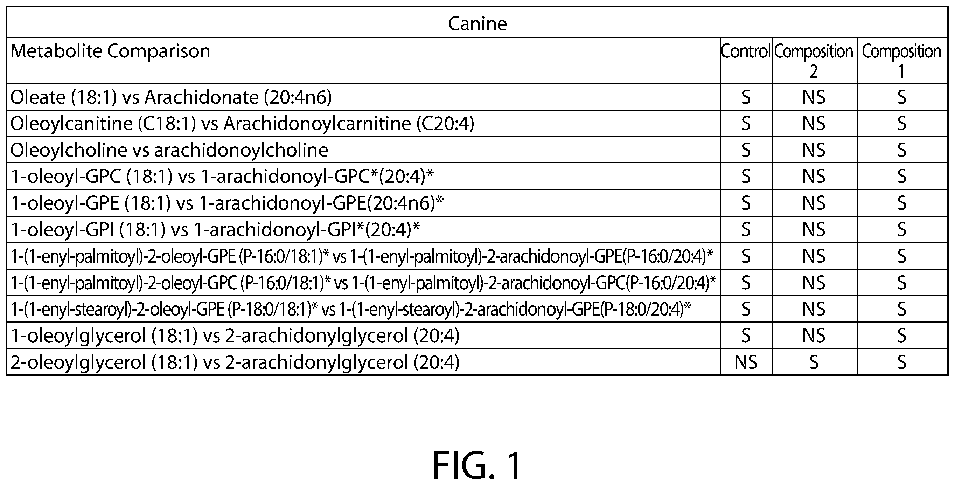

Figure 1 shows a comparison of various metabolites collected from the serum of dogs. "S" indicates a significance (P < 0.05) while "NS" indicates non-significance between the diet's comparison, as determined by matched pairs t-test.

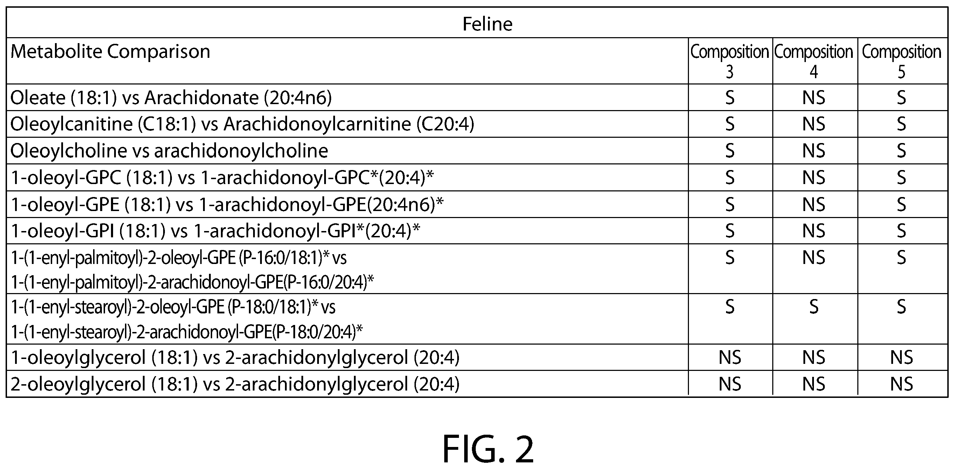

Figure 2 shows a comparison of various metabolites collected from the serum of dogs. "S" indicates a significance (P < 0.05) while "NS" indicates non-significance between the diet's comparison, as determined by matched pairs t-test.

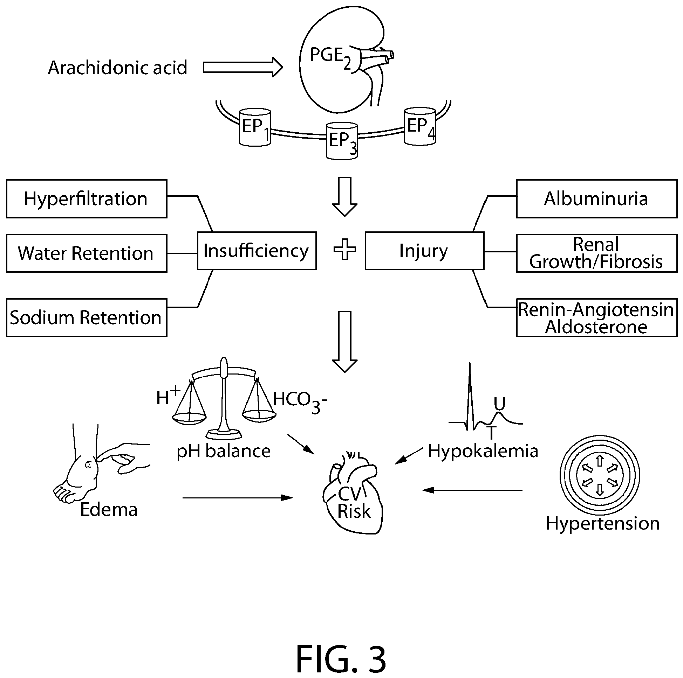

Figure 3 depicts a model showing the relationship of arachidonic acid to insufficiency and injury and to cardiovascular risk (CV Risk).

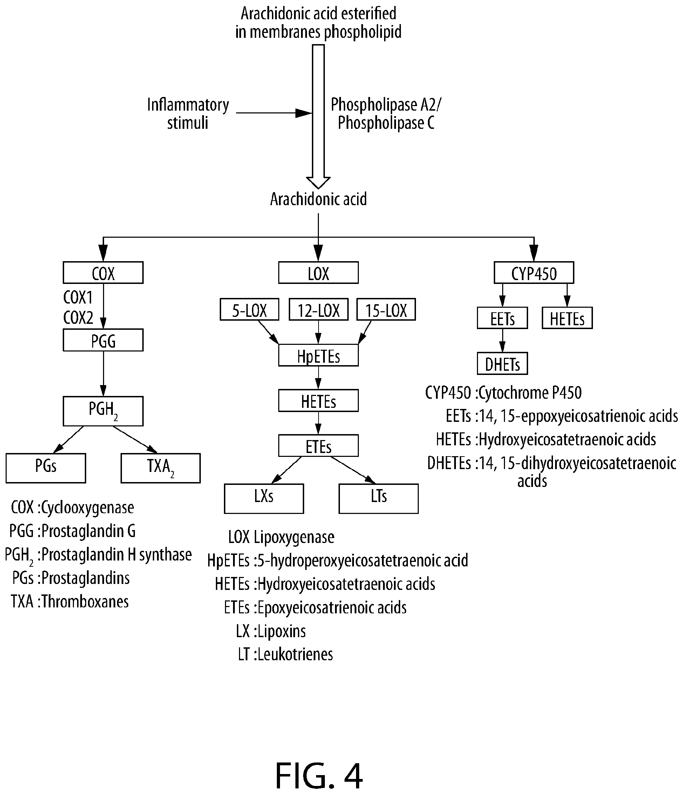

Figure 4 shows the eicosanoids biosynthesis pathways from arachidonic acid.

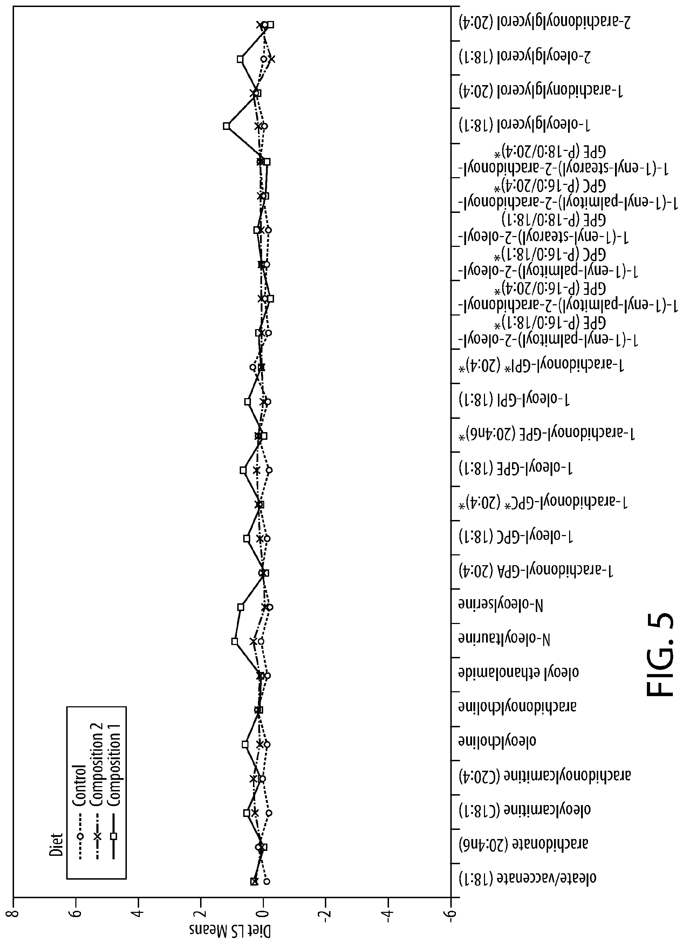

Figure 5 depicts a MANOVA analysis from dog serum of oleic acid and arachidonic acid conjugated fatty acids.

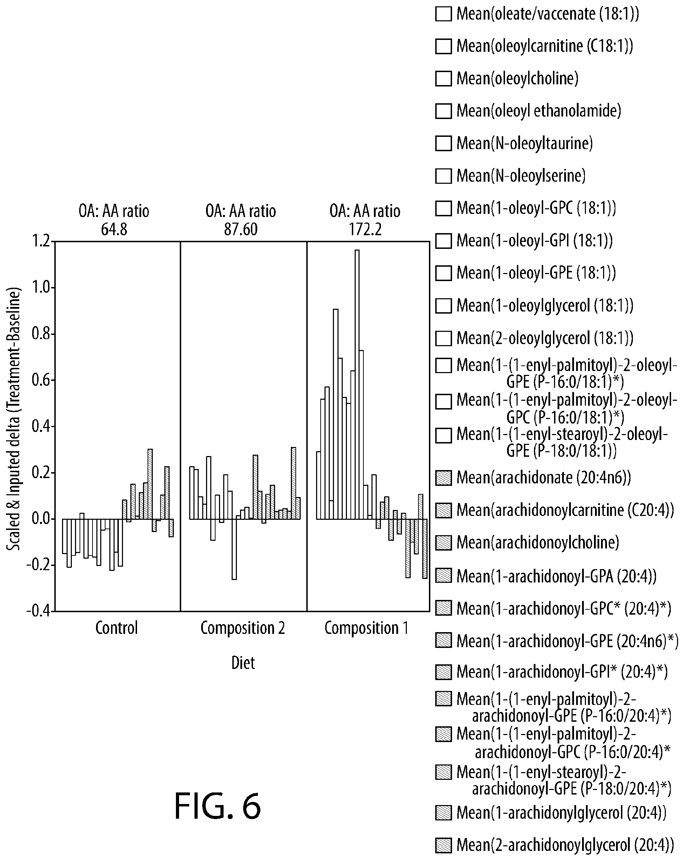

Figure 6 depicts the abundance of dog serum oleic acid and arachidonic acid conjugated metabolites. These values were determined by creating a variable which was the sum of the mean values for specific metabolites (as listed in Figure 6) at specific time points.

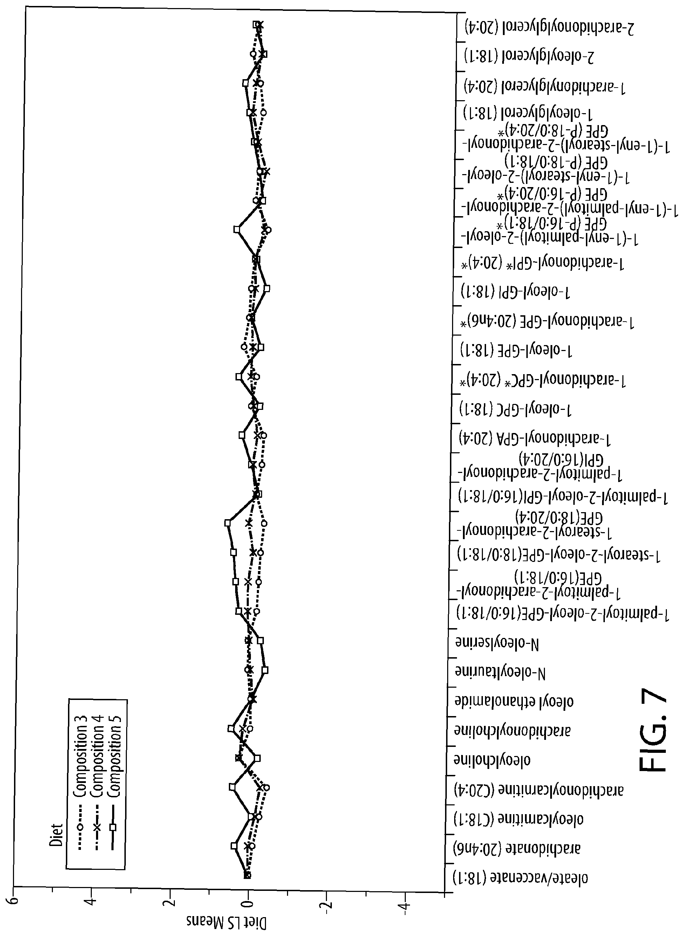

Figure 7 depicts a MANOVA analysis from cat serum of oleic acid and arachidonic acid conjugated fatty acids.

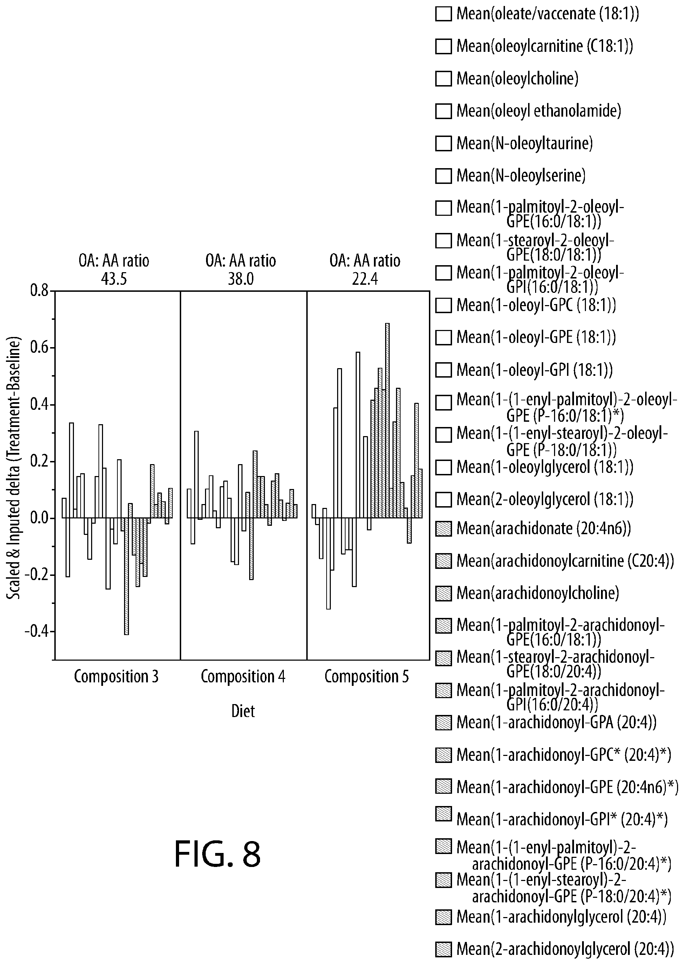

Figure 8 depicts the abundance of cat serum oleic acid and arachidonic acid conjugated metabolites. These values were determined by creating a variable which was the sum of the mean values for specific metabolites (as listed in Figure 8) at specific time points.

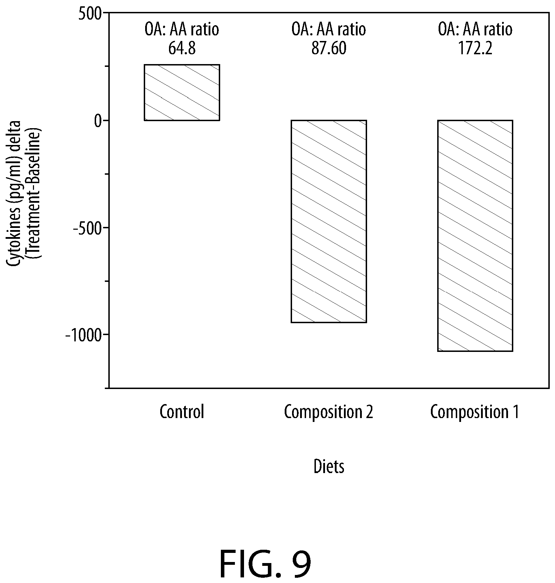

Figure 9 shows cytokine levels from the serum of dogs fed either control or experimental compositions.

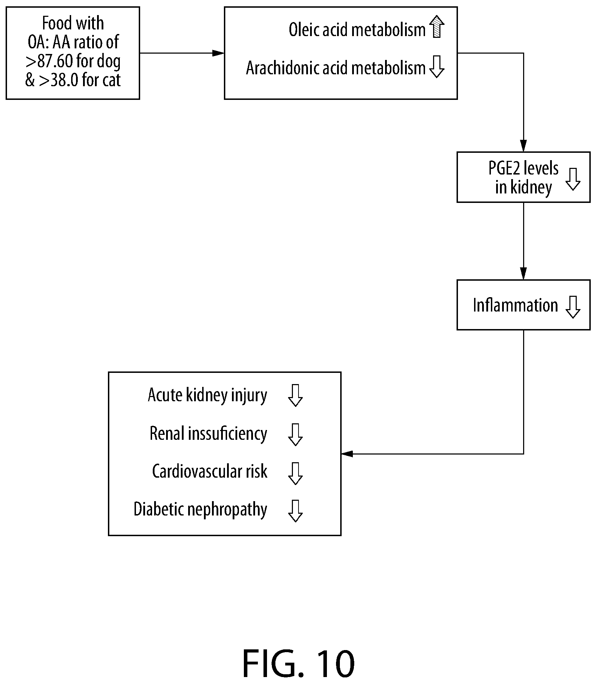

Figure 10 shows a mechanism of how a diet with high oleic acid supplementation may reduce renal insufficiency and cardiovascular risk in companion animals. Figure 10 is provided for illustration purposes only and is not according to the invention.

### EXAMPLES

The examples and other implementations described herein are exemplary and not intended to be limiting in describing the full scope of compositions and methods of this disclosure. Equivalent changes, modifications and variations of specific implementations, materials, compositions and methods may be made within the scope of the present disclosure, with substantially similar results.

### Example 1

Twenty-four healthy dogs, aged 10.4 to 12.9 years old, weighing 6.9 to 13.3 kg, spayed or neutered, were fed a control diet comprising chicken, wheat, barley, sorghum, corn, corn gluten meal, chicken meal, pork fat, beet pulp, soybean oil, vitamins and minerals in a pre-feed phase for 4 weeks and then divided into one of two groups. For phase 1, Group 1 was fed a Control diet while group 2 was fed a test diet (Composition 1) for 8 weeks. (See Table 1 for detailed compositions). Next, a washout period was performed by feeding all dogs the maintenance diet again for 4 weeks. Then, for phase 2, group 1 was fed the test diet and group 2 was fed the control diet for 8 weeks. Blood/serum samples were collected at the end of each step (e.g. pre-feed, phase 1, washout, and phase 2) and stored at -80 °C until further analysis.

**Table 1: Dog Food Compositions**

| **Ingredient** | **Control** | **Composition 1** | **Comparative Composition 2** |
|---|---|---|---|
| Ash | 4.44 | 4.47 | 5.85 |
| Fat | 18.88 | 19.05 | 13.01 |
| Fiber crude | 1.7 | 1.8 | 1.8 |
| Protein | 26.57 | 26.28 | 23.63 |
| Carbohydrates | 41.57 | 40.95 | 47.3 |
| Water | 7.17 | 7.21 | 8.41 |

| | Each composition contains: | | |
|---|---|---|---|
| Total dietary fiber | 8 | 8.2 | 6.8 |
| Fiber neutral detergent | 8.3 | 8.8 | 7.1 |
| Arachidonic acid | 0.05 | 0.05 | 0.05 |
| Oleic Acid | 3.24 | 8.61 | 4.38 |
| Oleic Acid: Arachidonic Acid Ratio | 64.8 | 172.2 | 87.6 |
| Omega 3 | 0.63 | 0.67 | 0.34 |
| Omega 6 | 4.25 | 4.87 | 2.84 |

A non-targeted metabolomics analysis was performed on the frozen serum samples collected from each dog. Briefly, serum samples were partitioned with methanol and resulting extract was divided into five aliquots to analyze on four different platforms as established by Metabolon Inc., Morrisville, NC. For serum metabolite and cytokine analysis, delta (treatment - baseline) values were calculated. These values were determined by creating a variable which was the sum of the mean values for specific metabolites (as listed in Figure 6 and Figure 8) at specific time points. For example, sample collected from a specific animal at the end of treatment were subtracted by the sample collected from the same animal at the end of pre-fed (baseline). Statistical analysis was performed by using JMP Pro v14.0 (SAS, Cary, NC).

Figure 1 shows a comparison of the conjugated metabolite results. "S" indicates a significance (P < 0.05) between the diet comparison by matched pairs t-test. "NS" indicates no significance in the diet comparison by matched pairs t-test.

The different ratios of oleic acid to arachidonic acid ("OA:AA") led to significant differences across the class of lipids, which included oleic acid ("OA") and arachidonic acid ("AA") metabolites. These metabolites, or biomarkers, show a decrease in inflammatory signal. Inflammation is known as an essential component of the immune system as it responds to infection or injury. However, the inflammatory response is typically meant to be transient and when the circumstances result in chronic inflammation it is a biological excess which is an important factor in the etiology of a range of common chronic diseases. Compositions of the invention resulted in a shift in the fatty acid moieties associated with a reduction in inflammation. For example, Composition 1, which had an OA:AA ratio of 172.2, showed a significant increase of serum OA conjugated metabolites compared with AA conjugated metabolites (see Figures 1, 5 & 6). Conversely, the Control diet, which had an OA:AA ratio of 64.8, showed significant increase of AA conjugated metabolites compared with OA conjugated metabolites (see Figures 1, 5 & 6). However, Comparative Composition 2, which has OA:AA ratio of 87.60, showed no significant differences between OA and AA conjugated metabolites (see Figures 1, 5 & 6). These results suggest that an OA:AA ratio greater than 87.60 decreases serum AA conjugated metabolites and ratio less than 87.60 increases serum AA conjugated metabolites.

### Example 2

Twelve healthy dogs, aged 1.2 to 8.5 years old, weighing 9.1 to 13.6 kg, spayed or neutered, were fed a control diet (same as in Example 1) in a pre-feed phase for 4 weeks followed by a treatment phase where the dogs were fed Comparative Composition 2 (See Table 1 for detailed compositions) for 4 weeks. Blood/serum samples were collected at the end of the pre-feed and treatment phases and stored at -80 °C until further analysis.

A non-targeted metabolomics analysis was performed on the frozen serum samples collected from each dog. Briefly, serum samples were partitioned with methanol and resulting extract was divided into five aliquots to analyze on four different platforms as established by Metabolon Inc., Morrisville, NC. For serum metabolite and cytokine analysis, delta (treatment - baseline) values were calculated. For example, sample collected from a specific dog or cat at the end of treatment were subtracted by the sample collected from the same dog or cat at the end of pre-fed (baseline). Statistical analysis was performed by using JMP Pro v14.0 (SAS, Cary, NC).

The results show that Comparative Composition 2 and Composition 1 significantly decreases plasma interleukin 8 (IL-8) expression levels compared with the Control diet (Figure 9). Increased plasma IL-8 has been shown to potentially be involved with the pathogenesis of acute kidney injury (Liangos et al., Nephron Clin Pract., 2009, 113:c148-C154) and in the establishment and preservation of the inflammatory micro-environment of the insulted vascular wall (Apostolakis S. et al., Cardiovasc Res., 2009, 84(3):353-60). Therefore, these results suggest that the OA:AA ratio of 87.60:1 or greater has an anti-inflammatory effect.

### Example 3

Thirty healthy cats, aged 2.1 to 8.9 years old, weighing 3.5 to 7.5 kg, spayed or neutered, underwent a prefeed phase where each was fed a control diet comprising chicken, wheat, corn gluten meal, pork fat, chicken meal, beet pulp, rice, soybean oil, vitamins and minerals for 4 weeks and then divided into 6 groups. The treatment phase consisted of feeding to each group one of three treatment diets (Composition 3, Comparative Composition 4, or Comparative Composition 5) in a different order based on treatment groups (See Table 2 for detailed compositions). This experiment is a Latin Square design which allows each cat to be fed all of the treatment foods, one during each period of the treatment phase. Since there are six groups within this study design, no bias based on food order existed. Each treatment diet was fed for 80 days and then changed to another treatment diet without a washout period. Blood/serum samples were collected at the end of the pre-feed and individual treatment diet timeframe (80 days) and stored at -80 °C until further analysis.

**Table 2: Cat food compositions**

| **Ingredient** | **Composition 3 ('316)** | **Comparative Composition 4 ('318)** | **Comparative Composition 5 ('317)** |
|---|---|---|---|
| Ash | 4.61 | 5.22 | 6.65 |
| Fat | 12.45 | 12.62 | 12.99 |
| Fiber crude | 1.6 | 1.6 | 1 |
| Protein | 25.84 | 32.07 | 50.67 |
| Carbohydrates | 46.9 | 39.9 | 21.2 |
| Final composition Moisture Content | 8.59 | 8.58 | 7.47 |

| | Each composition contains: | | |
|---|---|---|---|
| Total dietary fiber | 6.2 | 5.6 | 4.2 |
| Fiber neutral detergent | 6.1 | 5.1 | 3.5 |
| Arachidonic acid | 0.1 | 0.11 | 0.18 |
| Oleic Acid | 4.35 | 4.18 | 4.04 |
| Oleic:Arachidonic ratio | 43.5 | 38.0 | 22.4 |
| Omega 3 | 0.18 | 0.2 | 0.24 |
| Omega 6 | 2.85 | 2.8 | 2.93 |

A non-targeted metabolomics analysis was performed on the frozen serum samples collected from each cat. Briefly, serum samples were partitioned with methanol and resulting extract was divided into five aliquots to analyze on four different platforms as established by Metabolon Inc., Morrisville, NC. For example, sample collected from a specific animal at the end of treatment were subtracted by the sample collected from the same animal at the end of pre-fed (baseline). Statistical analysis was performed by using JMP Pro v14.0 (SAS, Cary, NC).

Figure 2 shows a comparison of the conjugated metabolite results. "S" indicates a significance (P < 0.05) between the diet comparison by matched pairs t-test. "NS" indicates no significance in the diet comparison by matched pairs t-test.

The results show that in cats, the different ratios of OA:AA led to significant differences across the class of lipids which contained either OA or AA. For example, the diet of Composition 3 has OA:AA ratio of 43.5 shows significant increase of serum OA conjugated metabolites compared with AA conjugated metabolites (see Figures 2, 7 & 8). Conversely, the diet Comparative Composition 5, which had an OA:AA ratio of 22.44, showed significant increase of AA conjugated metabolites compared with OA conjugated metabolites (see Figures 2, 7 & 8). However, Comparative Composition 4, which had an OA:AA ratio of 38.0, showed no significant differences between OA and AA conjugated metabolites (see Figures 2, 7 & 8). These results suggest that OA:AA ratio greater than 38.0 decreases serum AA conjugated metabolites and ratio lesser than 38.0 increases serum AA conjugated metabolites.

In summary, these results suggest that OA:AA ratio impacts host fatty acid metabolism and higher ratio (greater than 87.60 for dogs; greater than 38.0 for cats) suppresses AA metabolism and enhance OA metabolism, which has potential in alleviating CvRD/CRS syndrome. The proposed mechanism of action depicts that increasing OA:AA ratio in diet reduces AA metabolism, impacts PGE2 levels and reduce inflammation to alleviate chronic kidney damage or acute kidney injury as well as attenuating cardiovascular-renal axis disorders in companion animals (See Figure 10 for illustrative purposes).

The scope of the invention is to be determined from the claims appended hereto.

## Claims

1. A pet food composition comprising;
oleic acid; and
arachidonic acid;
wherein the weight ratio of oleic acid to arachidonic acid is from 160:1 to 190:1, particularly from 163.4:1 to 180.6:1.

2. The pet food composition according to claim 1, wherein the oleic acid is present in an amount of 4 to 12 weight %, 4 to 10 weight%, or 4 to 9 weight%, based on the dry weight of the pet food composition.

3. The pet food composition according to claim 1 or 2, wherein the arachidonic acid is present in an amount of 0.02 to 1 weight%, 0.02 to 0.08 weight %, or 0.02 to 0.06 weight %, based on the dry weight of the pet food composition.

4. The pet food composition according to any one of the previous claims, wherein the composition further comprises one or more omega-3 fatty acids, particularly in an amount of 0.1 to 1 weight %, 0.1 to 0.8 weight %, or 0.3 to 0.8 weight %, based on the dry weight of the pet food composition.

5. The pet food composition according to any one of the previous claims, wherein the composition further comprises one or more omega-6 fatty acids, particularly in an amount of 1 to 10 weight %, 1.5 to 7 weight %, or 2 to 5 weight %, based on the dry weight of the pet food composition.

6. The pet food composition according to claim 4 or 5, wherein the ratio of omega-3 fatty acid to omega-6 fatty acid is from 1:5 to 1:10, 1:6 to 1:9, or 1:7 to 1:9.

7. A combination of oleic acid and arachidonic acid for use in a method for reducing inflammation in a dog by increasing the oleic acid conjugated metabolites and decreasing the arachidonic acid conjugated metabolites, and/or by reducing serum interleukin-8 (IL-8) in the dog,
wherein the method comprises feeding the dog a pet food composition of any of claims 1-6 comprising the oleic acid and the arachidonic acid.

8. A pet food composition comprising;
oleic acid; and
arachidonic acid;
wherein the weight ratio of oleic acid to arachidonic acid is from 40.85:1 to 45.15:1.

9. The pet food composition according to claim 8, wherein:
(i) the oleic acid is present in an amount of 2 to 8 weight %, 3 to 7 weight %, or 4 to 6 weight %, based on the dry weight of the pet food composition; or
(ii) the arachidonic acid is present in an amount of 0.05 to 2 weight %, 0.05 to 1 weight %, or 0.07 to 0.3 weight %, based on the dry weight of the pet food composition; or
(iii) the pet food composition is **characterized by** both of features (i) and (ii).

10. The pet food composition according to any one of claims 8 to 9, wherein the composition further comprises one or more omega-3 fatty acids, particularly in an amount of 0.05 to 1 weight %, 0.0% to 0.08 weight %, or 0.05 to 0.5 weight %, based on the dry weight of the pet food composition.

11. The pet food composition according to any one of claims 8 to 10, wherein the composition further comprises omega-6 fatty acids, particularly in an amount of 1 to 10 weight %, 1.5 to 5 weight %, or 2 to 5 weight %, based on the dry weight of the pet food composition.

12. The pet food composition according to any one of claims 8 to 11, wherein the ratio of omega-3 fatty acids to omega-6 fatty acids is from 1:10 to 1:20, 1:12 to 1:18, or 1:12 to 1:16.

13. A combination of oleic acid and arachidonic acid for use in a method for reducing acute inflammation in a cat by increasing the oleic acid conjugated metabolites and decreasing the arachidonic acid conjugated metabolites in the cat, wherein the method comprises feeding the cat a pet food composition of any of claims 8-12 comprising the oleic acid and the arachidonic acid.

## Patentansprüche

1. Haustierfutterzusammensetzung, umfassend;
Ölsäure; und
Arachidonsäure;
wobei das Gewichtsverhältnis von Ölsäure zu Arachidonsäure von 160:1 bis 190:1, insbesondere von 163,4:1 bis 180,6:1, beträgt.

2. Haustierfutterzusammensetzung nach Anspruch 1, wobei die Ölsäure in einer Menge von 4 bis 12 Gew.-%, 4 bis 10 Gew.-% oder 4 bis 9 Gew.-%, bezogen auf das Trockengewicht der Haustierfutterzusammensetzung, vorhanden ist.

3. Haustierfutterzusammensetzung nach Anspruch 1 oder 2, wobei die Arachidonsäure in einer Menge von 0,02 bis 1 Gew.-%, 0,02 bis 0,08 Gew.-% oder 0,02 bis 0,06 Gew.-%, bezogen auf das Trockengewicht der Haustierfutterzusammensetzung, vorhanden ist.

4. Haustierfutterzusammensetzung nach einem der vorhergehenden Ansprüche, wobei die Zusammensetzung ferner eine oder mehrere Omega-3-Fettsäuren umfasst, insbesondere in einer Menge von 0,1 bis 1 Gew.-%, 0,1 bis 0,8 Gew.-% oder 0,3 bis 0,8 Gew.-%, bezogen auf das Trockengewicht der Haustierfutterzusammensetzung.

5. Haustierfutterzusammensetzung nach einem der vorhergehenden Ansprüche, wobei die Zusammensetzung ferner eine oder mehrere Omega-6-Fettsäuren umfasst, insbesondere in einer Menge von 1 bis 10 Gew.-%, 1,5 bis 7 Gew.-% oder 2 bis 5 Gew.-%, bezogen auf das Trockengewicht der Haustierfutterzusammensetzung.

6. Haustierfutterzusammensetzung nach Anspruch 4 oder 5, wobei das Verhältnis von Omega-3-Fettsäure zu Omega-6-Fettsäure von 1:5 bis 1:10, von 1:6 bis 1:9 oder von 1:7 bis 1:9 beträgt.

7. Kombination aus Ölsäure und Arachidonsäure zur Verwendung in einem Verfahren zum Reduzieren von Entzündung bei einem Hund durch Erhöhen der mit Ölsäure konjugierten Metaboliten und Verringern der mit Arachidonsäure konjugierten Metaboliten und/oder durch Reduzieren von Serum-Interleukin-8 (IL-8) in dem Hund,
wobei das Verfahren das Füttern des Hundes mit einer Haustierfutterzusammensetzung nach einem der Ansprüche 1-6, umfassend die Ölsäure und die Arachidonsäure, umfasst.

8. Haustierfutterzusammensetzung, umfassend;
Ölsäure; und
Arachidonsäure;
wobei das Gewichtsverhältnis von Ölsäure zu Arachidonsäure von 40,85:1 bis 45,15:1 beträgt.

9. Haustierfutterzusammensetzung nach Anspruch 8, wobei:
(i) die Ölsäure in einer Menge von 2 bis 8 Gew.-%, 3 bis 7 Gew.-% oder 4 bis 6 Gew.-%, bezogen auf das Trockengewicht der Haustierfutterzusammensetzung, vorhanden ist; oder
(ii) die Arachidonsäure in einer Menge von 0,05 bis 2 Gew.-%, 0,05 bis 1 Gew.-% oder 0,07 bis 0,3 Gew.-%, bezogen auf das Trockengewicht der Haustierfutterzusammensetzung, vorhanden ist; oder
(iii) die Haustierfutterzusammensetzung sowohl durch Merkmal (i) als auch durch Merkmal (ii) gekennzeichnet ist.

10. Haustierfutterzusammensetzung nach einem der Ansprüche 8 bis 9, wobei die Zusammensetzung ferner eine oder mehrere Omega-3-Fettsäuren umfasst, insbesondere in einer Menge von 0,05 bis 1 Gew.-%, 0,0 % bis 0,08 Gew.-% oder 0,05 bis 0,5 Gew.-%, bezogen auf das Trockengewicht der Haustierfutterzusammensetzung.

11. Haustierfutterzusammensetzung nach einem der Ansprüche 8 bis 10, wobei die Zusammensetzung ferner Omega-6-Fettsäuren umfasst, insbesondere in einer Menge von 1 bis 10 Gew.-%, 1,5 bis 5 Gew.-% oder 2 bis 5 Gew.-%, bezogen auf das Trockengewicht der Haustierfutterzusammensetzung.

12. Haustierfutterzusammensetzung nach einem der Ansprüche 8 bis 11, wobei das Verhältnis von Omega-3-Fettsäuren zu Omega-6-Fettsäuren von 1:10 bis 1:20, von 1:12 bis 1:18 oder von 1:12 bis 1:16 beträgt.

13. Kombination aus Ölsäure und Arachidonsäure zur Verwendung in einem Verfahren zum Reduzieren akuter Entzündung bei einer Katze durch Erhöhen der mit Ölsäure konjugierten Metaboliten und Verringern der mit Arachidonsäure konjugierten Metaboliten in der Katze,
wobei das Verfahren das Füttern der Katze mit einer Haustierfutterzusammensetzung nach einem der Ansprüche 8-12, umfassend die Ölsäure und die Arachidonsäure, umfasst.

## Revendications

1. Composition alimentaire pour animaux de compagnie comprenant ;
de l'acide oléique ; et
de l'acide arachidonique ;
dans laquelle le rapport pondéral de l'acide oléique à l'acide arachidonique est de 160:1 à 190:1, en particulier de 163,4:1 à 180,6:1.

2. Composition alimentaire pour animaux de compagnie selon la revendication 1, dans laquelle l'acide oléique est présent en une quantité de 4 à 12 % en poids, de 4 à 10 % en poids, ou de 4 à 9 % en poids, par rapport au poids sec de la composition alimentaire pour animaux de compagnie.

3. Composition alimentaire pour animaux de compagnie selon la revendication 1 ou 2, dans laquelle l'acide arachidonique est présent en une quantité de 0,02 à 1 % en poids, de 0,02 à 0,08 % en poids, ou de 0,02 à 0,06 % en poids, par rapport au poids sec de la composition alimentaire pour animaux de compagnie.

4. Composition alimentaire pour animaux de compagnie selon l'une quelconque des revendications précédentes, dans laquelle la composition comprend en outre un ou plusieurs acides gras oméga-3, en particulier en une quantité de 0,1 à 1 % en poids, de 0,1 à 0,8 % en poids, ou de 0,3 à 0,8 % en poids, par rapport au poids sec de la composition alimentaire pour animaux de compagnie.

5. Composition alimentaire pour animaux de compagnie selon l'une quelconque des revendications précédentes, dans laquelle la composition comprend en outre un ou plusieurs acides gras oméga-6, en particulier en une quantité de 1 à 10 % en poids, de 1,5 à 7 % en poids, ou de 2 à 5 % en poids, par rapport au poids sec de la composition alimentaire pour animaux de compagnie.

6. Composition alimentaire pour animaux de compagnie selon la revendication 4 ou 5, dans laquelle le rapport de l'acide gras oméga-3 à l'acide gras oméga-6 est de 1:5 à 1:10, de 1:6 à 1:9, ou de 1:7 à 1:9.

7. Combinaison d'acide oléique et d'acide arachidonique pour une utilisation dans une méthode de réduction de l'inflammation chez un chien par augmentation des métabolites conjugués à l'acide oléique et diminution des métabolites conjugués à l'acide arachidonique, et/ou par réduction de l'interleukine-8 sérique (IL-8) chez le chien,
dans laquelle le procédé comprend nourrir le chien avec une composition alimentaire pour animaux de compagnie selon l'une quelconque des revendications 1 à 6 comprenant l'acide oléique et l'acide arachidonique.

8. Composition alimentaire pour animaux de compagnie comprenant ;
de l'acide oléique ; et
de l'acide arachidonique ;
dans laquelle le rapport pondéral de l'acide oléique à l'acide arachidonique est de 40,85:1 à 45,15:1.

9. Composition alimentaire pour animaux de compagnie selon la revendication 8, dans laquelle :
(i) l'acide oléique est présent en une quantité de 2 à 8 % en poids, de 3 à 7 % en poids ou de 4 à 6 % en poids, par rapport au poids sec de la composition alimentaire pour animaux de compagnie ; ou
(ii) l'acide arachidonique est présent en une quantité de 0,05 à 2 % en poids, de 0,05 à 1 % en poids ou de 0,07 à 0,3 % en poids, par rapport au poids sec de la composition alimentaire pour animaux de compagnie ; ou
(iii) la composition alimentaire pour animaux de compagnie est caractérisée à la fois par les caractéristiques (i) et (ii).

10. Composition alimentaire pour animaux de compagnie selon l'une quelconque des revendications 8 à 9, dans laquelle la composition comprend en outre un ou plusieurs acides gras oméga-3, en particulier en une quantité de 0,05 à 1 % en poids, de 0,0 % à 0,08 % en poids, ou de 0,05 à 0,5 % en poids, par rapport au poids sec de la composition alimentaire pour animaux de compagnie.

11. Composition alimentaire pour animaux de compagnie selon l'une quelconque des revendications 8 à 10, dans laquelle la composition comprend en outre des acides gras oméga-6, en particulier en une quantité de 1 à 10 % en poids, de 1,5 à 5 % en poids, ou de 2 à 5 % en poids, par rapport au poids sec de la composition alimentaire pour animaux de compagnie.

12. Composition alimentaire pour animaux de compagnie selon l'une quelconque des revendications 8 à 11, dans laquelle le rapport des acides gras oméga-3 aux acides gras oméga-6 est de 1:10 à 1:20, de 1:12 à 1:18 ou de 1:12 à 1:16.

13. Combinaison d'acide oléique et d'acide arachidonique pour une utilisation dans une méthode de réduction de l'inflammation aiguë chez un chat par augmentation des métabolites conjugués à l'acide oléique et diminution des métabolites conjugués à l'acide arachidonique chez le chat, dans laquelle le procédé comprend nourrir le chat avec une composition alimentaire pour animaux de compagnie selon l'une quelconque des revendications 8 à 12 comprenant l'acide oléique et l'acide arachidonique.
